Europäisches Patentamt

European Patent Office

Office européen des brevets

(11) Publication number: **0 109 241**
**B1**

(12) **EUROPEAN PATENT SPECIFICATION**

(45) Date of publication of patent specification: **18.07.90**

(21) Application number: **83306733.3**

(22) Date of filing: **04.11.83**

(51) Int. Cl.⁵: **C 04 B 14/38, C 22 C 1/09,
B 28 B 1/52, D 21 H 13/36**

(54) Manufacture of composite of metal and synthetic inorganic fibrous material.

(30) Priority: **05.11.82 GB 8231594**

(43) Date of publication of application:
**23.05.84 Bulletin 84/21**

(45) Publication of the grant of the patent:
**18.07.90 Bulletin 90/29**

(84) Designated Contracting States:
**AT BE CH DE FR GB IT LI LU NL SE**

(56) References cited:
**GB-A-1 315 932
GB-A-2 093 009**

(73) Proprietor: **HEPWORTH REFRACTORIES
LIMITED
Hazlehead
Stockbridge Sheffield, S30 5HG (GB)**

(72) Inventor: **Boden, Donald
12 Ash Grove Darrington
Pontefract West Yorkshire WF8 3AA (GB)**
Inventor: **Young, Leslie
22, Beach Crescent Darrington
Pontefract West Yorkshire (GB)**

(74) Representative: **Evans, David Charles et al
F.J. CLEVELAND & COMPANY 40-43, Chancery
Lane
London, WC2A 1JQ (GB)**

Courier Press, Leamington Spa, England.

## Description

This invention relates to the manufacture of shaped articles incorporating a high content of synthetic inorganic fibres and in particular has reference to the manufacture of composite of metals and synthetic inorganic fibrous materials. The use of inorganic fibrous materials in the manufacture of such shapes is generally well known; it has been further proposed to manufacture such shapes containing inorganic fibrous mateirals for the insulation of, for example, ingot or metal casting feeder heads. The manufacture of such shapes has been proposed forming an aqueous slurry or slop from, for example, newspaper, card or other organic fibrous materials and introducing into the slurry, refractory or other aggregate together with organic or binders and inorganic fibres.

Inorganic fibres, such as kaolin wool, are relatively easy to prepare and hold in suspension in a mechanically agitated slop tank. Man-made inorganic fibres do not, however, have the ability to hold water in the way that many naturally occurring inorganic fibrous materials do. It is generally desirable, when attempting to form shaped articles from synthetic inorganic fibres, to have the minimum of additives, and particularly organic additives, in order to impart the maximum refractoriness and heat resistance on the shapes so formed.

The man-made inorganic fibres suffer from the disadvantage that, unlike their organic counterparts, it is more difficult to maintain these materials in suspension to obtain the required degree of orientation of the fibres on formation of the shaped article.

It will be appreciated by the man skilled in the art that it is the orientation of the fibres that give the finally shaped article its inherent strength. It is essential in order to obtain a satisfactory strength that maximum orientation of the fibres in one plane is obtained.

Thus, for example, when forming an insulation board or shape, a cake is formed from a slurry containing inorganic man-made fibres, in which the vast majority of fibres should be substantially parallel to the plane of the cake itself. While some orientation of the fibres within the plane may be permitted, any substantial variation of the orientation of the fibres out of that plane will inevitably result in a weakening of the final product.

With the development of metals for use in highly stressed materials it has been appreciated that the introduction of oriented fibrous reinforcement into metal structures would improve the properties of such materials and thus provide for the possible replacement of heavy materials by lighter composites of the same shape. Much experimental work has been done on the methods of forming metal/fibre composites, but these have not been successful, either because the density of the fibres in the metal has not been sufficient to achieve a significant improvement in properties or because the resultant composite has not been sufficiently uniform due to the formation of occlusions within a more dense fibre structure.

The present Applicants have concentrated on the initial formation of a fibre preform and the subsequent introduction of a metal thereinto. The formation of fibrous shapes in general is dealt with in British Patent Specification No. 1315932 which discloses pressing operations with slurried materials and in which the amount of liquid allowed to drain from the slurry prior to active deliquifying occurring is contained. Practice of this process has shown that the deposition of the slurried materials still occurs.

This results in a pressed article having a surface layer of semi-randomly orientated material onto which is superimposed pressed material having a more regular fibre orientation. The result, therefore, is a non-uniform product. Furthermore the density of the inorganic fibre shapes produced in British Patent Specification No. 1315932 is relatively low, since insufficient fibre orientation is achieved so that after pressing the fibres 'spring' back to occupy a greater volume than is desirable. Furthermore, the process of U.K. Patent Specification No. 1315932 is based very much on the introduction of significant quantities of organic materials such as comminuted newspaper and like cellulosic material which is wholly inappropriate in the formation of preforms for use in the formation fibre reinforced metal composites. In short, British Patent Specification No. 1315932 is concerned with the formation of a shape or board of the barrier type used in hot tops and the like.

According to the present invention there is provided a method for the production of a composite of metal and inorganic fibrous materials which method comprises forming a shaped preform from an aqueous slurry of fibrous material and a binder therefor, by introducing the slurry into a die or mold, removing liquid over a period of time to obtain orientation of a proportion of said fibres, and to obtain a cohesive shape or form and thereafter pressing to remove residual liquid from the molded shape or form, drying said preform at an elevated temperature, introducing metal around and into the preform to cause or allow the metal to flow into the interstices between the fibres to produce a fibrous reinforced metal composite; characterised in that

(i) the fibre material is a synthetic inorganic fibre material,

(ii) a binder is provided comprising a combination of starch with an inorganic binder selected from colloidal silica, ethyl silicate and colloidal alumina, and

(iii) the preform is calcined at a temperature above 600°C after drying to remove injurious organic constituents.

The fibrous material may be selected from inorganic fibrous materials having a melting point greater than 1000°C Centigrade. The inorganic fibres may be selected from fibres of alumina, magnesia, beryllia, silicon carbide and carbon.

In one embodiment of the invention, the starch is a cationic starch.

The compression ratio within the pressing step is preferably in the range 2:1 to 10:1; the expulsion of the liquid may be effected in opposite directions along said axis.

For the purposes of this specification, it is to be understood where reference is made to pressing in a monoaxial direction, in the case of a curved or circular shape, sensibly radial expulsion may be included in this term although expulsion may be truly monoaxial when expulsion is longitudinal of, for example, a cylinder or square tube.

In the preparation of the preform according to one aspect of the invention the slurry may be subjected to a threshold pressure prior to substantial dewatering taking place; this threshold pressure is preferably at least 20% of the final pressure exerted on the solid constituents of the slurry. The threshold pressure maintained during the deliquification of the slurry may be a balance between the applied pressure at or above the threshold and the rate of deliquification necessary to obtain the maximum fibre orientation and the resultant improvement in density of the shaped fibre mat article.

In one embodiment, the said threshold pressure may be greater that 50% of pressure finally applied. In a further embodiment, greater than 80% of final pressure may be employed. The upper limit of pressing is that at which under pressure alone, the fibres alter significantly their characteristics and properties.

In a modification of the invention, the threshold pressure may be relaxed by up to 50% until deliquification has proceded substantially to completion.

The slurry of binders and fibres in water in accordance with the invention may be formed in a hydropulper. The pressing step may be affected in a mould cavity having impermeable side walls, an upper piston and a lower piston, with inlet means for the introduction of slurry under pressure in the mould. At least one of the upper piston and the lower piston may be permeable so that on pressing, liquid can be discharged from the mould cavity while the solids contents are retained therein.

The slurry may be formed as described above and discharged into a stuff chest with sufficient agitation to maintain the slurry without substantial deposit of the solid material therefrom. The slurry may be supplied by means of a diaphragm pump into the mould cavity, the pump being adapted to maintain a preset hydrostatic pressure, and being a diaphragm pump provides the agitation necessary to maintain the solids in the slurry in suspension prior to commencement of the deliquification step.

In one embodiment of the invention, each of said upper and lower pistons may incorporate permeable die heads, the permeability of each head being controlled by adjustable valves, the arrangement being such that the pistons may be operated to achieve a controlled hydrostatic pressure in the mould cavity without substantial drainage of the liquid prior to an increase in pressure whereby substantial deliquification of the fibrous slurry takes place. The lower piston may preferably be provided with a permeability such that principle deliquification occurs downwardly during upward movement of the lower piston thereby controlling the orientation of the inorganic fibres with maximum parallelism. In a particular embodiment of the present invention, fibrous material is of relatively short length and it is further preferred that the inorganic fibrous material is calcined prior to inclusion within the slurry in order to remove injurous organic constituents.

The preparation of composites in accordance with the present invention sometimes referred to as "cermets" permits the adoption of high fibre densities in the preform of the order indicated above, allowing the production of cermets having a fibre content in the range of 20%—25%. In this preparation, the dry pressed fibre composition, is calcined at 600°C to remove any organic constituents. The metal material is then introduced into the product in order to produce a strong cermet composition.

Composites of, for example, alumina fibre can be prepared with between 20 and 30% fibre contents. The liquid metal may be introduced into the pressed shaped fibrous mats by various well known techniques, but essentially a process where the liquid metal is fed under pressure into the pores of the fibrous mat for which purpose the latter is contained in a mould suitably perforated to permit the evacuation or expulsion of air from the mat thus giving free access of the metal to the interstices of the mat.

The temperature of metal and the pressures applied may be varied as required as increased fluidity and pressure will generally improve acceptance of the metal, but it is desirable that pressures are not excessive; for this reason vacuum extraction of the air may be used. It is a feature of mats produced according to the present invention that they must readily accept the introduction of the metal to provide substantially complete penetration. Colloidal silica as a binder appears to assist by lowering surface tension of the molten metal. Optimum properties for the fibre mat may be achieved using a comparatively short fibre with the complete absence of shot debris and other non-fibrous constituents.

In a particular embodiment of the invention "Saffil" alumina fibre of high purity and high temperature performance can be found to give particularly good results and aluminium/Saffil composites prepared from these fibres processed in accordance with the present invention have improved tensile strength over the aluminium alone, particularly within the temperature range of 330—500°C.

Metal ceramic composites formed in accordance with the present invention and particularly aluminium composites are endowed with a high temperature strength which in the case of aluminium is also combined with considerable lightness.

Following is a description by way of example only of one method of carrying the invention into effect.

### Example

A mix composition was prepared as follows:

1000 gm "Saffil" 2000 Alumina Fibre
100 gm 30% Aqueous Colloidial Silica Solution
40 gm Cationic Starch

The colloidial silica solution and starch are mixed in 15 litres of water and the inorganic alumina fibre is then introduced with gentle agitation to form an homogeneous slurry. The mix is introduced into a stuff chest under pressure with gentle agitation to maintain the homogeneity of the slurried materials. A proportion of the material was then supplied to a die apparatus of the type described above capable of producing slabs of dimensions 9" × 4" × 1" (22.9 × 10.2 × 2.5 cm). Slurry was transported from the stuff chest by means of a diaphragm pump, the material being maintained under a preset hydrostatic pressure during transfer with the material being injected towards the lower end of the mould cavity thereby providing maximum agitation on the introduction of the material and precluding to as large an extent as possible any presettlement of the slurry materials. On completion of the introduction of the material into the mould the upper and lower pistons were operated to apply and to maintain a preset hydrostatic pressure. This pressure is maintained by adjustable spring loaded valves carried on the pistons or carried in the mould cavity. A further increase in the pressure causes at least one of said valves to open to allow passage of water therethrough in a direction perpendicular to the direction of pressing. Principal dewatering is caused by the upward movement of the lower piston, the upper piston merely providing a check against which the lower piston can act. Continued upward movement of the lower piston causes the steady and progressive flow of water against increased pressure from the mould cavity with the consequential orientation of the fibres randomly within a plane perpendicular to the direction of pressing. Thus in this embodiment the fibres will tend to orient in a plane parallel to the surfaces of the upper and lower pistons. Pressing continues to effect substantial dewatering of the slurry and thereafter pressing the resulting material to an extent to remove the maximum amount of water possible. The resulting products when removed from the mould cavity were then dried and found to have a bulk density prior to calcination that was between 0.55 and 0.65 grammes per cm$^3$.

Cermets were obtained by the permeation of molten aluminium into the slabs, the molten aluminium being forced thereinto either by the pressure or drawn thereinto under vacuum, or by a combination of both and were found to have excellent tensile strength at temperatures of 350°C and above.

## Claims

1. A method for the production of a composite of metal and inorganic fibrous materials which method comprises forming a shaped preform from an aqueous slurry of fibrous material and a binder therefor, introducing the slurry into a die or mold, removing liquid over a period of time to obtain orientation of a proportion of said fibres, and to obtain a cohesive shape or form and thereafter pressing to remove residual liquid from the molded shape or from, drying said preform at an elevated temperature, introducing metal around and into the preform to cause or allow the metal to flow into the interstices between the fibres to produce a fibrous reinforced metal composite; characterised in that

(i) the fibre material is a synthetic inorganic fibre material,

(ii) a binder is provided comprising a combination of starch with an inorganic binder selected from colloidal silica, ethyl silicate and colloidal alumina, and

(iii) the preform is calcined at a temperature above 600°C after drying to remove injurious organic constituents.

2. A method as claimed in claim 1 characterised in that the rate of deliquification is controlled so that at least 95% of said fibres have an orientation within 15% of the axis of said direction.

3. A method as claimed in any preceding claim characterised in that the pressure exerted in the pressing step is such that the density of the resultant dried article is at least 0.4 g per cc.

4. A method as claimed in any preceding claim characterised in that the synthetic inorganic fibrous material is selected from alumina fibre and fibres of magnesia, beryllia, silicon carbide and carbon.

5. A method as claimed in any preceding claim characterised in that the fibrous material is of relatively short length.

6. A method as claimed in any preceding claim characterised in that the starch is a cationic starch.

7. A method as claimed in any preceding claim characterised in that the slurry is introduced into the die or mold and prior to the expulsion of liquid, is subjected to a pulsating hydrostatic pressure to maintain the solids substantially wholly in suspension.

8. A method as claimed in claim 7 characterised in that deliquification of the slurry is effected by pressing at a pressure at or above said pulsating hydrostatic pressure and removal of the liquid in one direction which is accompanied by monoaxial orientation and deposition of fibres.

9. A method as claimed in claim 1 characterised in that the density of the preform is such that the resulting composition has a fibre content within the range of 20 to 30%.

10. A method as claimed in either of the preceding claims characterised in that the liquid metal is fed under pressure into the interstices of the fibrous mat constituting the preform.

11. A method as claimed in claim 10 characterised in that the preform is disposed within a mold suitably perforated to permit the evacuation or expulsion of air from the interstices of the fibrous preform prior to introduction of molten metal thereinto.

12. A method as claimed in any preceding claim wherein the preform is prepared from a slurry of constituents by introducing the slurry into a mold and pressing the slurry to expel liquid therefrom in one direction to obtain orientation of the fibres, the slurry being introduced into the mold and subjected to hydrostatic pressure to a predetermined threshold pressure without substantial settlement of the slurry solids, further pressing at a pressure above the threshold accompanied by mono-axial orientation and deposition of the fibre in which the rate of deliquification is controlled so that at least 95% of the fibres have an orientation within 15°C of the axis of expulsion.

**Patentansprüche**

1. Verfahren zur Herstellung eines Verbundwerkstoffs aus Metall und anorganischen Fasern, bei dem die Bildung eines konturierten Rohwerkstücks aus einer wässrigen Schlämme mit Fasermaterial und einem hierzu passend ausgewählten Bindemittel, Einführen dieser Schlämme in eine Präge- oder Gießform und Austreiben von Flüssigkeit über eine Zeitspanne hinweg zum Erhalt der Ausrichtung eines Faseranteils vorgesehen sind, um eine zusammenhängende Form oder Struktur zu erhalten, die danach gepreßt wird, um Restflüssigkeit aus der gegossenen Form oder Struktur auszutrieben, worauf dieses Rohwerkstück bei erhöhter Temperatur getrocknet wird und wiederum danach Metall in das Rohwerkstück eingeführt und auf ihm abgelagert wird, um das Metall zu veranlassen, in die Zwischenräume zwischen den Fasern einzudringen und so eine faserverstärkte Metallzusammensetzung zu erhalten, dadurch gekennzeichnet, daß

(i) das Fasermaterial synthetisches anorganisches Fasermaterial ist,

(ii) ein Bindemittel vorgesehen ist, das eine Zusammensetzung von Stärke und einem organischen Bindemittel enthält, das aus der Gruppe kolloidales Siliziumoxid, Äthylsilikate und kolloidales Aluminiumoxid ausgewählt ist und

(iii) die Vorform nach Trocknung bei einer Temperatur über 600°C geglüht wird, um schädliche organische Bestandteile zu beseitigen.

2. Verfahren nach Anspruch 1, dadurch gekennzeichnet, daß die Entflüssigungsrate derart gesteuert wird, daß zumindest 95% der Fasern eine Ausrichtung innerhalb von 15° der Achse der Richtung haben.

3. Verfahren nach einem der vorhergehenden Ansprüche, dadurch gekennzeichnet, daß der beim Pressen ausgeübte Druck derart bestimmt ist, daß die Dichte des resultierenden getrockneten Gegenstandes zumindest 0,4 g je cc beträgt.

4. Verfahren nach einem beliebigen der vorhergehenden Ansprüche, dadurch gekennzeichnet, daß das synthetische anorganische Fasermaterial aus folgender Gruppe ausgewählt ist: Aluminium-oxidfasern und Fasern aus Magnesiumoxid, Berylliumoxid, Siliziumkarbid und Kohlenstoff.

5. Verfahren nach einem beliebigen der vorhergehenden Ansprüche, dadurch gekennzeichnet, daß das Fasermaterial eine relativ geringe Länge hat.

6. Verfahren nach einem beliebigen der vorhergehenden Ansprüche, dadurch gekennzeichnet, daß die Stärke kationische Stärke ist.

7. Verfahren nach einem beliebigen der vorhergehenden Ansprüche, dadurch gekennzeichnet, daß die Schlämme in eine Präge- oder Gießform eingebracht und vor der Flüssigkeitsaustreibung einem pulsierenden hydrostatischen Druck unterworfen wird, um die Gesamtheit der Feststoffe in Suspension zu halten.

8. Verfahren nach Anspruch 7, dadurch gekennzeichnet, daß die Flüssigkeitsaustreibung aus der Schlämme durch Pressen bei einem Druck bewirkt wird, der dem pulsierenden hydrostatischen Druck entspricht oder über diesem liegt und daß die Austreibung der Flüssigkeit in einer Richtung erfolgt.

9. Verfahren nach Anspruch 1, gekennzeichnet durch eine Dichte des Rohwerkstücks derart, daß das daraus hervorgehende Werkstück im Endzustand einen Fasergehalt im Bereich von 20 bis 30% aufweist.

10. Verfahren nach einem beliebigen der vorhergehenden Ansprüche, dadurch gekennzeichnet, daß das geschmolzene Metall unter Druck in die Zwischenräume der Fasermatte eingeführt wird, die das Rohwerkstück bildet.

11. Verfahren nach Anspruch 10, dadurch gekennzeichnet, daß das Rohwerkstück in einer zweckentsprechend gelochten Form angeordnet ist, um die Evakuierung oder Austreibung von Luft aus den Zwischenräumen des faserigen Rohwerkstücks vor der Einführung des flüssigen Metalls in diese Zwischenräume zu ermöglichen.

12. Verfahren nach einem beliebigen der vorhergehenden Ansprüche, wobei das Rohwerkstück aus einer Schlämme aus mehreren Bestandteilen hergestellt wird, indem die Schlämme in eine Form eingebracht und darin gepreßt wird, um aus ihr Flüssigkeit in einer Richtung auszutreiben, um wiederum hierdurch eine Ausrichtung der Fasern zu erhalten, wobei die Schlämme in die Form eingeführt wird und einem hydrostatischen Druck unterworfen wird, ohne daß dabei ein wesentliches Absetzen der Feststoffanteile der Schlämme erfolgt, wobei weiteres Pressen bei einem Druck oberhalb des Schwellwertes folgt, das begleitet wird von einer monoaxialen Ausrichtung und Absetzung der Fasern, wobei schließlich die Entflüssigungsrate derart gesteuert wird, daß zumindest 95% der Fasern eine Ausrichtung innerhalb 15° der Austreibungsachse liegt.

## Revendications

1. Méthode de production d'un objet composite à partir de métal et de fibres inorganiques, laquelle méthode consiste à former une préforme en forme à partir d'une bouillie aqueuse de la fibre et de son liant, à introduire la bouillier dans une matrice ou un moule, à enlever le liquide sur une période de temps pour obtenir l'orientation d'une proportion de ladite fibre et pour obtenir une forme cohésive et ensuite à presser pour enlever le liquide résiduel de la forme moulée, à sécher ladite préforme à une température élevée, à introduire du métal autour et dans la préforme pour forcer ou permettre au métal de s'écouler dans les interstices entre les fibres pour produire un objet composite de métal renforcé de fibres; caractérisée en ce que

(i) la fibre est une fibre inorganique synthétique,

(ii) un liant est prévu comprenant une combinaison d'amidon avec un liant inorganique choisi parmi la silice colloïdale, le silicate d'éthyle, et l'alumine colloïdale, et

(iii) la préforme est calcinée à une température au delà de 600°C après séchage pour éliminer les constituants organiques néfastes.

2. Méthode selon la revendication 1, caractérisée en ce que le taux de déliquéfaction est contrôlé afin qu'au moins 95% desdites fibres aient une orientation à 15% de l'axe de ladite direction.

3. Méthode selon l'une quelconque des revendications précédentes, caractérisée en ce que la pression exercée dans l'étape de pression est telle que la densité de l'article séché résultant soit d'au moins 0,4 g par cm³.

4. Méthode selon l'une quelconque des revendications précédentes, caractérisée en ce que la fibre inorganique synthétique est choisie parmi une fibre d'alumine et des fibres de magnésie, d'oxyde de béryllium, de carbure de silicium et de carbone.

5. Méthode selon l'une quelconque des revendications précédentes, caractérisée en ce que la fibre est d'une relativement courte longueur.

6. Méthode selon l'une quelconque des revendications précédentes, caractérisée en ce que l'amidon est un amidon cationique.

7. Méthode selon l'une quelconque des revendications précédentes, caractérisée en ce que la bouillie est introduite dans la matrice ou le moule et, avant expulsion du liquide, elle est soumise à une pression hydrostatique pulsatoire pour maintenir les solides sensiblement totalement en suspension.

8. Méthode selon la revendication 7, caractérisée en ce que la déliquéfaction de la bouillie est effectuée en pressant à une pression à ou au delà de ladite pression hydrostatique pulsatoire et en enlevant le liquide dans une direction ce qui est accompagné d'une orientation monoaxiale et d'un dépôt de fibres.

9. Méthode selon la revendication 1, caractérisée en ce que la densité de la préforme est telle que la composition résultante ait une teneur en fibres entre 20 et 30%.

10. Méthode selon l'une quelconque des revendications précédentes, caractérisée en ce que le métal liquide est introduit sous pression dans les interstices du tapis fibreux constituant la préforme.

11. Méthode selon la revendication 10, caractérisée en ce que la préforme est disposée dans un moule perforé de manière appropriée pour permettre l'évacuation ou l'expulsion de l'air des interstices de la préforme fibreuse avant introduction du métal fondu.

12. Méthode selon l'une quelconque des revendications précédentes où la préforme est préparée à partir d'une bouillie de constituants en introduisant la bouillie dans un moule et en pressant la bouillie pour en expulser le liquide dans une direction pour obtenir l'orientation des fibres, la bouillie étant introduite dans le moule en soumise à une pression hydrostatique jusqu'à une pression prédéterminée de seuil et sans dépôt sensible des solides de la bouillie, en pressant ensuite à une pression au delà du seuil accompagnée d'une orientation monoaxiale et d'un dépôt de la fibre où le taux de déliquéfaction est contrôlé de manière qu'au moins 95% des fibres aient une orientation à 15° de l'axe d'expulsion.